# EUROPEAN PATENT APPLICATION

(11) **EP 2 680 112 A1**
(43) Date of publication of application: **01.01.2014**
(21) Application number: 12749875.6
(22) Date of filing: 22.02.2012
(51) Int. Cl.: G06F 3/041, H04M 1/02

(54) **ELECTRONIC DEVICE**

(30) Priority: 23.02.2011 JP 2011036524
(71) Applicant: NEC CASIO Mobile Communications, Ltd., Kawasaki-shi Kanagawa 211-8666 (JP); NTT DOCOMO, Inc., Chiyoda-ku Tokyo 100-6150 (JP)
(72) Inventor: SATO, Junya, Kawasaki-shi, Kanagawa 211-8666 (JP); SHIRAISHI, Mitsutaka, Kawasaki-shi, Kanagawa 211-8666 (JP); HOMMA, Yasuyuki, Kakegawa-shi, Shizuoka 436-8501 (JP); YANO, Eiji, Tokyo 100-6150 (JP); NAGATA, Ryuuji, Tokyo 100-6150 (JP); SUGISAKI, Haruhiko, Tokyo 100-6150 (JP)
(74) Representative: Vossius & Partner
(86) International application number: PCT/JP2012/054312
(87) International publication number: WO 2012/115163

(57) **Abstract**

Electronic apparatus has touch panel module, display module and flexible circuit board. Touch panel module includes touch panel, screen member protecting touch panel, and adhesive that bonds touch panel and screen member together. Display module includes first substrate, second substrate superposed on part of first substrate, and driver chip that controls operation of display module, driver chip being mounted in area of first substrate not overlapped with second substrate, on same side of first substrate as side thereof carrying second substrate. Touch panel module and display module are arrayed so that touch panel and second substrate face each other. Edge part of flexible circuit board is sandwiched between touch panel and screen member and, in plan projection, is disposed superposed on driver chip or disposed offset in direction of second substrate away from driver chip.

## Description

### TECHNICAL FIELD

### (DESCRIPTION OF RELATED APPLICATION)

The present application is based upon and claims the benefit of the priority of JP Patent Application 2011-036524 filed in Japan on February 23, 2011, whose disclosure is incorporated herein in its entirety by reference thereto.

This invention relates to an electronic apparatus provided with a touch panel device.

### BACKGROUND

In electronic apparatuses, including mobile terminal apparatuses, the number of those using a touch panel as an input mechanism increases rapidly. In the touch panels, there are various systems, such as a resistance film system, an optical system, a static capacitance system, an ultrasonic system or an electromagnetic induction system. Of these, the resistance film system and the static capacitance system are of relatively lower cost and lends itself to reduction in size or in thickness. Hence, these systems are extensively used, centered on mobile terminal apparatuses. In the mobile terminal apparatuses, a large number of combinations of a liquid crystal display (LCD) and a touch panel are proposed (see Patent Literature 1, as an example).

Mobile terminal apparatuses are being widely used these days by personal users or enterprises due to improved communication services and reduction in the communication costs. The mobile terminal apparatuses are now being used in rapidly increasing numbers not only for calls (communication by voice) but also for accesses to the Internet or for e-mails, such that, due to increased numbers of characters displayed, the area of the LCD tends to be increased. Since the mobile terminal apparatus is becoming progressively smaller in size, weight and thickness, the proportion of the LCD relative to the size of the entire apparatus is increasing. In addition, there is an increasing demand for the mobile terminal apparatus in which the LCD and the touch panel are combined together.

To put the LCD to practical use, an LCD driver IC, controlling the driving and display of the LCD, is to be connected to the LCD. As a method of connecting the LCD driver IC to the LCD, TAB (Tape Auto Bonding), COF (Chip on Film), COG (Chip on Glass) and the like, for example, are generally known. In mobile communication apparatuses, such as mobile phone apparatuses, the COG system is used in general because the mobile phone apparatus, as an example, is thin in thickness and has a small packaging area.

The LCD includes two glass plates, a liquid crystal material sealed in-between the glass plates, and a polarizing plate bonded to each of the front and back sides of a glass plate unit which is a combination of the two glass plates. A transparent electrode of ITO (Indium-Tin Oxide) is provided on an inner surface of each glass plate. For an electrode part destined for connection to an IC in each of the TAB, COF and COG systems, it is necessary to have the transparent electrode exposed, so that it is a structure of only a single glass plate.

A liquid crystal display apparatus disclosed in Patent Literature 1 includes a liquid crystal display panel and a touch panel. The liquid crystal display panel is made up of a color filter substrate, a TFT substrate and a liquid crystal layer sandwiched in-between. The TFT substrate is provided with a connection terminal for connection to a flexible interconnect substrate, configured to provide for connection to an external circuit, and with a driver for driving the liquid crystal display panel. Hence, the TFT substrate is formed to a size greater than the color filter substrate. The touch panel and the liquid crystal display panel are interconnected by a common flexible interconnect substrate. A connection terminal for connection between the touch panel and the flexible interconnect substrate is provided on a side opposite to a side touched by a user. That is, the flexible interconnect substrate is connected to an inner surface side of the touch panel.

### CITATION LIST

### PATENT LITERATURE

[Patent Literature 1]
   JP Patent Kokai Publication No. JP2009-116090A1

### SUMMARY

### TECHNICAL PROBLEM

The disclosure of the Patent Literature is incorporated by reference herein. The following analysis is given from the perspective of the present invention.

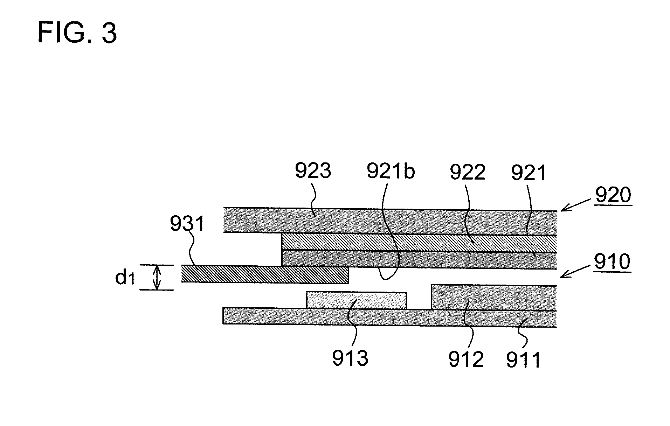

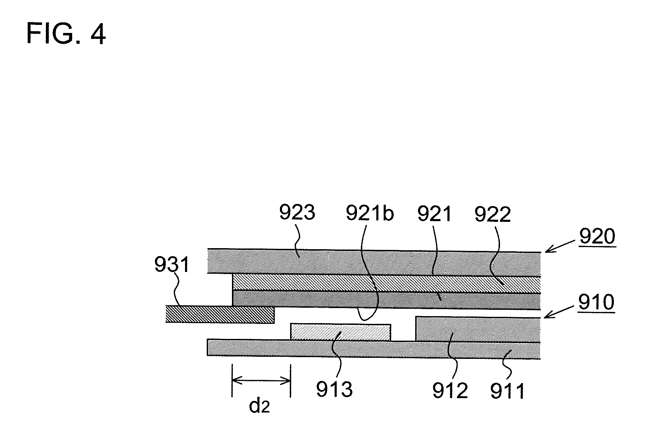

Fig.3 and Fig.4 depict schematic cross-sectional views to illustrate a problem to be solved by the present invention. Specifically, Fig.3 and Fig.4 depict schematic cross-sectional views showing an electronic apparatus according to a background art. The electronic apparatus, shown in Fig.3 and Fig.4, includes an LCD module 910, a touch panel module 920 and a flexible circuit board 931 connected to the touch panel module 920. The LCD module 910 includes a first glass plate 911, a second glass plate 912 and an LCD driver chip 913 mounted on the first glass plate 911. The touch panel module 920 includes a touch panel sensor glass member 921, a screen glass member 923 and an adhesive 922 that bonds the touch panel sensor glass member 921 to the screen glass member 923. The flexible circuit board 931 is connected to a lower surface 921b of the touch panel sensor glass member 921, that is, to a surface of the touch panel sensor glass member facing the LCD module 910.

In a mode shown in Fig.3, the flexible circuit board 931 is disposed on top of the LCD driver chip 913, viz., it is overlapped with the LCD driver chip 913. In this case, the flexible circuit board 931 must be spaced apart from the LCD driver chip 913. This will increase the thickness in an amount corresponding to an interval d₁, as an example, which is deterrent to reducing the thickness of the electronic apparatus. On the other hand, if it is desired to reduce the thickness of the electronic apparatus, the flexible circuit board 931 is arranged so that the flexible circuit board 931 will not overlap with the LCD driver chip 913, as shown in a mode shown in Fig.4. In such case, the touch panel sensor glass member 921 and so forth must be transversely extended in length, and hence an area is to be additionally provided (for example, in an amount corresponding to a value d₂), thus deterring reducing the size of the electronic apparatus.

### SOLUTION TO PROBLEM

In a first aspect of the present invention, there is provided an electronic apparatus comprising a touch panel module, a display module and a flexible circuit board. The touch panel module includes a touch panel, a screen member that protects the touch panel and an adhesive that bonds the touch panel and the screen member together. The display module includes a first substrate, a second substrate superposed on a part of the first substrate, and a driver chip, which driver chip is mounted in an area of the first substrate not overlapped with the second substrate, on the same side of the first substrate as its side carrying the second substrate. The driver chip controls the operation of the display module. The touch panel module and the display module are arrayed so that the touch panel and the second substrate face each other. The flexible circuit board is electrically connected to the touch panel module. An edge part of the flexible circuit board is sandwiched between the touch panel and the screen member and disposed superposed in plan projection on the driver chip or disposed offset in a direction of the second substrate away from the driver chip.

### ADVANTAGEOUS EFFECTS OF INVENTION

The present invention has at least one of the following advantageous effects.

According to the present invention, a flexible circuit board is sandwiched between a touch panel and a screen member in a touch panel module. An edge part of the flexible circuit board is superposed at least with a driver chip. In this configuration, a spacing necessary for the flexible circuit board may be reduced to achieve reduction in size and thickness of an electronic apparatus.

### BRIEF DESCRIPTION OF THE DRAWINGS

Fig.1 is a schematic partial cross-sectional view showing an electronic apparatus according to a first exemplary embodiment of the present invention.
Fig.2 is a plan view showing a planar projection of the electronic apparatus shown in Fig.1.
Fig.3 is a schematic cross-sectional view for explaining a problem to be solved by the present invention.
Fig.4 is a schematic cross-sectional view for explaining the problem to be solved by the present invention.
Fig.5 is a schematic cross-sectional view for illustrating an advantageous effect of the present invention.
Fig.6 is a schematic cross-sectional view for illustrating an advantageous effect of the present invention.

### MODES FOR CARRYING OUT THE INVENTION

A preferred mode of the above mentioned first aspect will now be set forth.

In a preferred mode of the first aspect, the touch panel is arranged overlying a second substrate and a driver chip. An edge part of the touch panel is not overlapped in plan projection with the second substrate or with the driver chip.

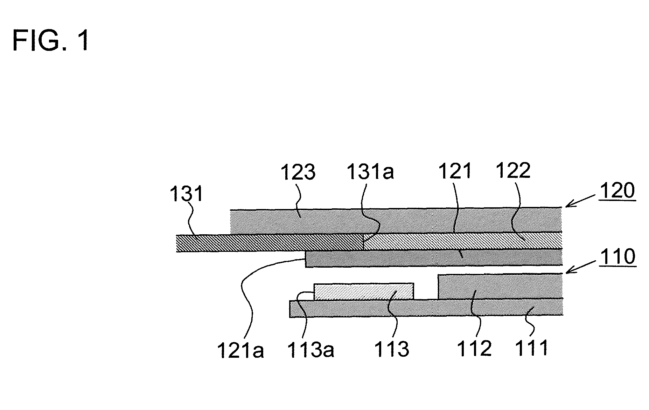

An electronic apparatus according to a first exemplary embodiment of the present invention will now be explained. Fig.1 depicts a schematic partial cross-sectional view of the electronic apparatus according to the first exemplary embodiment of the present invention. The electrical apparatus includes a display module 110, a touch panel module 120 and a flexible circuit board 131. As a display, an LCD, an organic EL (Electro Luminescence) and the like may be used. The LCD is taken up by way of an example in the following explanation.

The LCD module 110 includes a first substrate 111 and a second substrate 112 superposed one upon the other. The LCD module also includes a liquid material (not shown) sealed in-between the first and second substrates 111, 112, and a polarizing plate (not shown) bonded to each of the first and second substrates 111, 112. Moreover, the LCD module includes a driver chip 113 which is mounted on the first substrate 111 by a COG (Chip on Glass) technique and which operates to control the operation (driving and display) of the LCD. Each of the first and second substrates 111, 112 includes a base material of reinforced glass or the like and a transparent electrode film (not shown) which is formed of, for example, ITO (Indium Tin Oxide) and is deposited on each of the opposing surfaces of the first and second substrates 111, 112. The first and second substrates 111, 112 are partially overlapped with each other. The driver chip 113 is mounted in an area of the first substrate 111 which is not overlapped with the second substrate 112, viz., in an area of the first substrate 111 which is exposed from the second substrate 112. The driver chip 113 is mounted on the same side of the first substrate 111 as that carrying the second substrate, in such a manner as to face the touch panel module 120.

The touch panel module 120 includes a touch panel 121, a screen member 123 and an adhesive 122, such as UV light curable resin and the like, which is used to bond the touch panel 121 and the screen member 123 together. The screen member 123 is formed of reinforced glass, transparent resin or the like and is used to protect the touch panel 121 as well as the LCD module 110. The touch panel 121 includes a substrate of reinforced glass, transparent resin or the like, and a transparent electrode film of ITO or the like.

The LCD module 110 and the touch panel module 120 are arranged so that the second substrate 112 and the touch panel 121 face each other. The touch panel 121 overlies the second substrate 112 and the driver chip 113. That is, the touch panel 121 is mounted in a surface-to-surface opposing relationship with respect to the second substrate 112 and the driver chip 113.

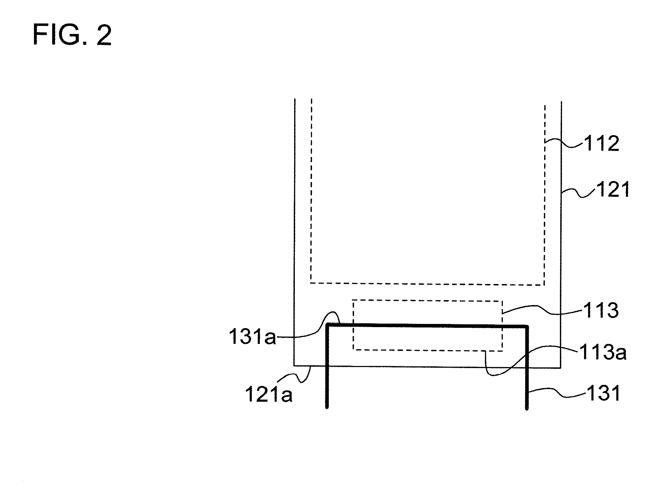

Fig.2 depicts a plan view showing planar projection of the electronic apparatus shown in Fig.1. Referring to Fig.2, the second substrate 112 is shown by a broken line, and the driver chip 113 is shown by another broken line. The touch panel 121 is shown with a thin solid line and the flexible circuit board 131 is shown with a thick solid line. An edge part 121a of the touch panel 121 is not disposed on top of the second substrate 112 or the driver chip 113. In other words, when seen in plan projection, the edge part is not superposed with the second substrate 112 or with the driver chip 113. Preferably, the edge part 121a of the touch panel 121 is disposed more outwardly than an edge part 113a of the driver chip 113 which is on a terminal end side of the LCD module 110 (an edge part of the driver chip on opposite side to the second substrate 112), that is, on a side of the driver chip which is remoter from the second substrate 112.

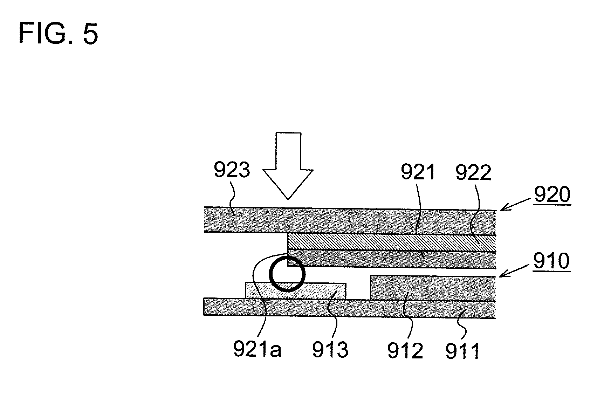

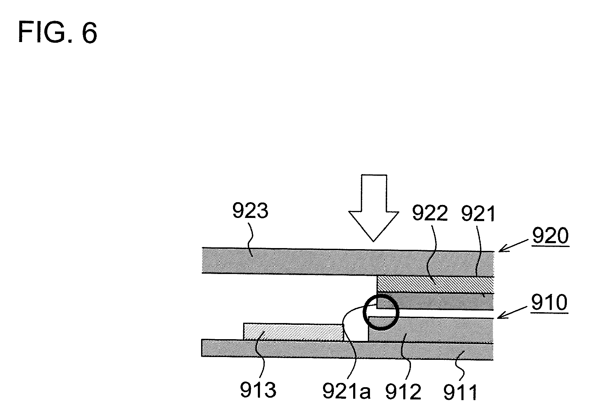

Fig.5 and Fig.6 depict schematic cross-sectional views for illustrating the advantageous effect of the present invention. The elements shown in Fig.5 and Fig.6, showing cross-sectional views of an electronic apparatus, are the same as those shown in Fig.3 and in Fig.4, respectively. In a mode shown in Fig.5, an edge part 921 a of a touch panel sensor glass member 921 is disposed on top of a driver chip 913. In a mode shown in Fig.6, an edge part 921a of a touch panel sensor glass member 921 is disposed on top of a second glass plate 912. If, in such modes, a force of impact or a static force is exerted from outside to the electronic apparatus, the edge part 921a of the touch panel sensor glass member 921 comes into contact with the driver chip 913 or the second glass plate 912, as indicated by circle marks in Fig.5, Fig.6. This may cause fractures in the driver chip 913, second glass plate 912 or in the touch panel 920. In the electronic apparatus of the present invention, shown in Fig.1, Fig.2, if an external force is exerted to the touch panel module 120, the edge part 121a of the touch panel 121 is suppressed from coming into contact with the driver chip 113 or with the second substrate 112. It is thus possible to prevent these component elements from becoming fractured.

The flexible circuit board 131 is sandwiched between the touch panel 121 and the screen member 123 and, in this manner, is electrically connected to the touch panel module 120. A pre-set gap is defined between the touch panel 121 and the screen member 123 due to a thickness of the adhesive 122. By dint of this gap, the flexible circuit board 131 is bonded to the touch panel module 120. That is, the flexible circuit board 131 is provided on the same layer as the layer of the adhesive 122. This may reduce the thickness of the electronic apparatus.

Preferably, an edge part 131a of the flexible circuit board 131 is disposed over the driver chip 113 or disposed more inwardly of the LCD module 110 than the driver chip 113. That is, in plan projection, the edge part 131a of the flexible circuit board 131 is preferably arranged superposed on the driver chip 113 or disposed offset in a direction of the second substrate 112 away from the driver chip 113. In such configuration, it is unnecessary to arrange the flexible circuit board 131 so that it is not overlap in the plan projection with the driver chip 113. It is unnecessary that the touch panel module 120 is enlarged in size to avoid overlapping of the driver chip 113 with the flexible circuit board to render it possible to reduce the size of the electronic apparatus. Additionally, even in case the flexible circuit board 131 is arranged superposed in the plan projection on the driver chip 113, it is unnecessary to provide a void spacing for the flexible circuit board 131 between the LCD module 110 and the touch panel module 120. Hence, the electronic apparatus may be reduced in thickness.

According to the present invention, possible fractures attendant on contact of the touch panel 121 with the second substrate 112 or the driver chip 113 may be suppressed to improve reliability of the electronic apparatus. Moreover, according to the present invention, the flexible circuit board 131 is sandwiched between the touch panel 121 and the screen member 123, and thus the electronic apparatus may be reduced in thickness in an amount corresponding to the thickness of the adhesive 122. In addition, in such configuration, it is possible to prevent increase in size or thickness of the electronic apparatus attendant on connection of the flexible circuit board 131 to the lower surface of the touch panel 121.

The electronic apparatus according to the present invention has been described with reference to the above exemplary embodiments. However, the electronic apparatus of the present invention is not limited to the above exemplary embodiments and may include a wide variety of modifications, alterations and improvements, within the scope of the entire disclosure inclusive of the claims, based on the basic technical idea of the present invention. Within the scope of the claims, a wide variety of combinations, substitutions and selections of disclosed elements (including elements of the claims, exemplary embodiments and the drawings) may be possible.

Further problems, objects and developing modes of the present invention will become apparent from the entire disclosure of the invention inclusive of the claims.

### INDUSTRIAL APPLICABILITY

The present invention may be applied to electronic apparatuses, such as mobile phones, mobile audio apparatuses, mobile game machines, small-sized personal computers and the like, provided with a touch panel.

### REFERENCE SIGNS LIST

- 110: LCD module
- 111: first substrate
- 112: second substrate
- 113: driver chip
- 113a: edge part
- 120: touch panel module
- 121: touch panel
- 121a: edge part
- 122: adhesive
- 123: screen member
- 131: flexible circuit board
- 131a: edge part
- 910: LCD module
- 911: first glass plate
- 912: second glass plate
- 913: LCD driver chip
- 920: touch panel module
- 921: touch panel sensor glass member
- 921a: edge part
- 921b: lower surface
- 922: adhesive
- 923: screen glass member
- 931: flexible circuit board

## Claims

1. An electronic apparatus, comprising:
a touch panel module;
a display module; and
a flexible circuit board; wherein
the touch panel module includes a touch panel, a screen member that protects the touch panel and an adhesive that bonds the touch panel and the screen member together;
the display module includes a first substrate, a second substrate superposed on a part of the first substrate, and a driver chip that controls an operation of the display module, the driver chip being mounted in an area of the first substrate not overlapped with the second substrate, on the same side of the first substrate as a side thereof carrying the second substrate;
the touch panel module and the display module are arrayed so that the touch panel and the second substrate face each other;
the flexible circuit board is electrically connected to the touch panel module; and
an edge part of the flexible circuit board is sandwiched between the touch panel and the screen member and, in plan projection, is disposed superposed on the driver chip or disposed offset in a direction of the second substrate away from the driver chip.

2. The electronic apparatus according to claim 1, wherein
the touch panel is disposed overlying the second substrate and the driver chip; and
an edge part of the touch panel does not overlap with the second substrate or with the driver chip in plan projection.
